# EUROPEAN PATENT APPLICATION

(11) **EP 3 306 778 A1**
(43) Date of publication of application: **11.04.2018**
(21) Application number: 15882911.9
(22) Date of filing: 23.10.2015
(51) Int. Cl.: H02J 7/02

(54) **WIRELESS CHARGING SYSTEM AND METHOD**

(30) Priority: 08.06.2015 CN 201510307852
(71) Applicant: BOE Technology Group Co., Ltd., Beijing 100015 (CN)
(72) Inventor: GUO, Weiqing, Beijing 100176 (CN)
(74) Representative: Gesthuysen Patent- und Rechtsanwälte
(86) International application number: PCT/CN2015/092659
(87) International publication number: WO 2016/197518

(57) **Abstract**

A wireless charging system is disclosed, comprising a receiver circuit and a transmitter circuit, wherein the wireless charging system further comprises: a voltage detector connected to a load located at a side of the receiver circuit, for detecting a voltage change on the load; a transmitter connected to the voltage detector, for receiving a signal representing the voltage change on the load from the voltage detector and transmitting the signal; a receiver for receiving the signal from the transmitter and providing the signal to the transmitter circuit; wherein the transmitter circuit comprises a variable voltage source for providing different output voltages to the receiver circuit based on the signal received from the receiver. The wireless charging system overcomes the problem that the output voltage of the transmitter circuit of the conventional wireless charging system cannot realize self-adaptive adjustment based on the change of the load, and reduces the power consumption of the wireless charging system. A method for use in the wireless charging system is also disclosed.

## Description

### FIELD OF THE INVENTION

The present invention generally relates to the power transmission technology, particularly, to a wireless power transmission technology.

### BACKGROUND OF THE INVENTION

The wireless power transmission refers to a power supply technology that charges a battery of an electronic device and the like wirelessly in place of conventional wired cables. The wireless power transmission technology has the advantage that when charging the battery of an electronic device and the like, even if the power supply is not connected to the electronic device through a wired cable, it can still charge the battery of the electronic device wirelessly. Hence, related research on the wireless power transmission technology presents a very active trend.

The existing wireless power transmission technology uses a DC or AC power supply to provide the voltage of the DC or AC power supply to the receiver circuit through wireless power transmission measures. The receiver circuit supplies power to the load with the received voltage. At present, the wireless power transmission measures mainly include electromagnetic induction, radio wave and electromagnetic resonance technologies.

### SUMMARY OF THE INVENTION

In the wireless power transmission technology, the load of the receiver circuit may be variable. Correspondingly, the energy required by the load may also be variable. However, in the existing wireless charging system, the energy (i.e., the power) outputted by the transmitter circuit is constant, such that the outputted energy cannot be adjusted adaptively based on the changing condition of the load.

The technical solution of the present invention is proposed with respect to the above problem in the prior art.

An aspect of the present invention proposes a wireless charging system, comprising a receiver circuit and a transmitter circuit, wherein the wireless charging system further comprises: a voltage detector, connected to a load located at a side of the receiver circuit, for detecting a voltage change on the load; a transmitter connected to the voltage detector, for receiving a signal representing the voltage change on the load from the voltage detector and transmitting the signal; a receiver for receiving the signal from the transmitter and providing the signal to the transmitter circuit; wherein the transmitter circuit comprises a variable voltage source for providing different output voltages to the receiver circuit based on the signal received from the receiver.

The wireless charging system according to the present invention overcomes the problem that the output voltage of the transmitter circuit of the conventional wireless charging system cannot realize self-adaptive adjustment based on the change of the load, and reduces the power consumption of the wireless charging system.

According to an embodiment of the present invention, the variable voltage source may comprise a controller and a variable resistor. The controller controls a resistance value of the variable resistor based on the signal received from the receiver.

According to an embodiment of the present invention, the variable resistor can be a slide resistor.

According to an embodiment of the present invention, the transmitter circuit may further comprise: a driver for converting a voltage from the variable voltage source into a power signal for wireless transmission.

According to an embodiment of the present invention, the receiver circuit may comprise: a rectifier for converting the wirelessly received power signal into a voltage signal; and a voltage regulator for regulating the voltage signal and providing the voltage signal to the load.

According to an embodiment of the present invention, the transmitter may transmit the signal representing the voltage change on the load to the receiver by wireless communication.

According to an embodiment of the present invention, the wireless communication may include one of the following: Bluetooth, WiFi and ZigBee.

According to an embodiment of the present invention, the transmitter can perform binary coding on the voltage change on the load, and the receiver can decode the binary coded voltage change on the load.

According to an embodiment of the present invention, the transmitter circuit can transmit power signals to the receiver circuit in one of the following ways: electromagnetic induction, radio, and electromagnetic resonance.

According to an embodiment of the present invention, the voltage detector can integrate the signal representing the voltage change on the load before providing the signal to the transmitter. Thus interference to the voltage detector caused by transient change of the load voltage can be eliminated, so as to improve robustness of the voltage detector.

Another aspect of the present invention proposes a device, comprising: a voltage detector for detecting a voltage change on a load located in the device; and a transmitter connected to the voltage detector, for receiving a signal representing the voltage change on the load from the voltage detector and transmitting the signal wirelessly.

According to an embodiment of the present invention, the device further comprises: a receiving coil for receiving a power signal wirelessly; a rectifier for converting the wirelessly received power signal into a voltage signal; and a voltage regulator for regulating the voltage signal and providing the voltage signal to the load.

Another aspect of the present invention proposes a power supply device, comprising: a receiver for receiving signals wirelessly; and a variable voltage source for outputting different output voltages based on the signals received from the receiver.

According to an embodiment of the present invention, the variable voltage source comprises a controller and a variable resistor. The controller controls a resistance value of the variable resistor based on the signals received from the receiver.

According to an embodiment of the present invention, the power supply device further comprises: a driver for converting a voltage from the variable voltage source into a power signal for wireless transmission; and a transmitting coil for transmitting the power signal wirelessly.

A further aspect of the present invention proposes a method for use in a wireless charging system, comprising: detecting a voltage change on a load by a voltage detector located at a side of a receiver circuit, and providing a signal representing the voltage change on the load to a transmitter; transmitting the signal representing the voltage change on the load by the transmitter; receiving the signal from the transmitter by a receiver, and providing the signal to a transmitter circuit; and providing different output voltages to the receiver circuit based on the signal received from the receiver by a variable voltage source in the transmitter circuit.

The wireless charging system and the method for use in the wireless charging system according to the present invention overcome the problem that the output voltage of the transmitter circuit of the conventional wireless charging system cannot realize self-adaptive adjustment based on the change of the load, and reduce the power consumption of the wireless charging system.

### BRIEF DESCRIPTION OF THE DRAWINGS

The above and other aspects, features and other advantages will be understood more clearly through the following detailed description in connection with the drawings, wherein:
Fig. 1 schematically shows a wireless charging system according to an embodiment of the present invention;
Fig. 2 schematically shows a variable voltage source according to an embodiment of the present invention; and
Fig. 3 schematically shows a flow chart of a method for use in a wireless charging system according to an embodiment of the present invention.

### DETAILED DESCRIPTION OF THE INVENTION

In the following, the exemplary embodiments of the concept of the present invention will be described in detail with reference to the drawings.

Based on the following detailed description of some embodiments of the present invention with reference to the drawings, these and other features and advantages of the present invention will be understood more completely. The drawings intend to illustrate rather than limit the present invention. However, the concept of the present invention can be illustrated in various forms and should not be understood as being limited to the particular embodiments elaborated herein.

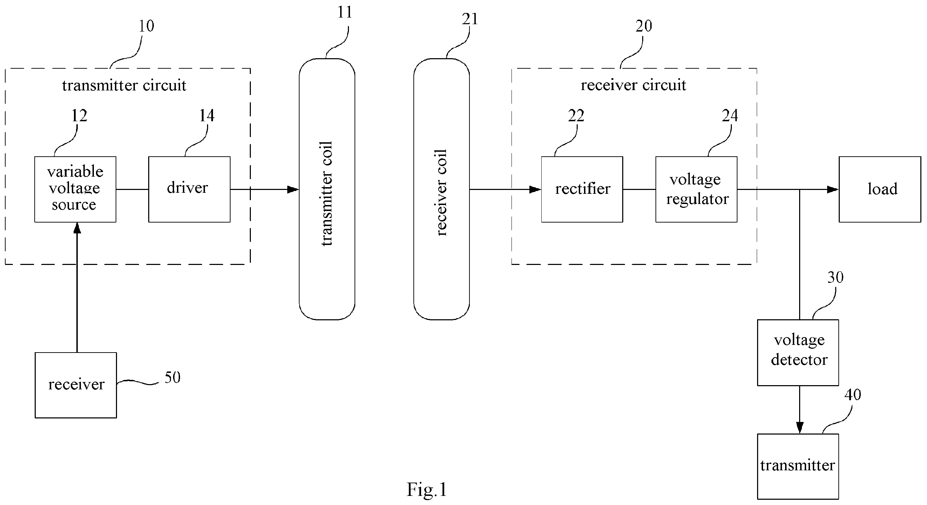

Fig. 1 schematically shows a wireless charging system according to an embodiment of the present invention. The wireless charging system may comprise a transmitter circuit 10, a receiver circuit 20 and a transmitter coil 11 and a receiver coil 12 for transmitting power signals wirelessly. The skilled person in the art should be aware that the transmitter coil 11 and the receiver coil 12 schematically shown in Fig. 1 are only used for representing the transmission of power signals between the transmitter circuit 10 and the receiver circuit 20 by a wireless power transmission measure, without defining the specific manner of the wireless power transmission measure used. The wireless power transmission measures may include electromagnetic induction, radio, and electromagnetic resonance. In addition, with further development of the wireless power transmission technology, other wireless power transmission measures may also come up.

As shown in Fig. 1, the wireless charging system according to the embodiment may further comprise a voltage detector 30 connected to a load located at a side of the receiver circuit, for detecting a voltage change on the load; a transmitter 40 connected to the voltage detector 30, for receiving a signal representing the voltage change on the load from the voltage detector 30 and transmitting the signal; a receiver 50 for receiving the signal from the transmitter 40 and providing the signal to the transmitter circuit 10.

The transmitter circuit 10 may comprise a variable voltage source 12 and a driver 14. The variable voltage source 12 can provide different output voltages based on the signal received from the receiver 50. The driver 14 can convert the voltage from the variable voltage source 12 into a power signal for wireless transmission.

The receiver circuit 20 may comprise a rectifier 22 and a voltage regulator 24. The rectifier 22 can convert the power signal wirelessly received from the transmitter circuit 10 into a voltage signal. The voltage regulator 24 can regulate the rectified voltage signal and provide the rectified voltage signal to the load.

The conventional wireless charging system provides a constant charging voltage for the load, without considering that the load may need different energy under different conditions; therefore, it results in unnecessary energy consumption.

In an embodiment of the present invention, a voltage change on the load can be detected through the voltage detector 30. The transmitter 40 can be connected to the voltage detector 30, for receiving a signal representing voltage change on the load from the voltage detector 30 and transmitting the signal to the receiver 50. The receiver 50 can receive the signal from the transmitter 40 and provide the signal to the variable voltage source 12 in the transmitter circuit 10. The variable voltage source 12 can provide different output voltages based on the signal received from the receiver 50. Consequently, a feedback loop from the load to the voltage source is established.

For example, the voltage detector 30 can provide the voltage change amount on the load to the transmitter 40. The transmitter 40 can perform binary coding on the voltage change amount, and transmit the binary code representing the voltage change amount on the load to the receiver 50 through wireless communication. The wireless communication can include one of the following: BlueTooth, WiFi and ZigBee.

The receiver 50 can decode the binary coded voltage change on the load, so as to obtain the voltage change amount on the load. The receiver 50 can provide the voltage change amount to the variable voltage source 12. The variable voltage source 12 can provide different output voltages based on the voltage change amount, thereby enabling the energy provided by the transmitter circuit to meet the load requirement of the receiver circuit. According to another embodiment of the present invention, the receiver 50 may not decode the binary coded voltage change on the load; instead, it directly provides the binary coded voltage change on the load to the variable voltage source 12. The variable voltage source 12 can provide different output voltages based on the binary coded voltage change on the load, thereby enabling the energy provided by the transmitter circuit to meet the load requirement of the receiver circuit.

The voltage detector 30 can also integrate the signal representing the voltage change on the load before providing the signal to the transmitter 40. Thus the interference to the voltage detector caused by transient change of the load voltage can be eliminated, so as to improve robustness of the voltage detector.

For example, the voltage detector 30 can perform multiple sampling on the load voltage at a predetermined time interval, and calculate an average value of the multiple sampling. When the change of the average value of the voltage exceeds a predetermined threshold value, the voltage detector 30 provides the signal representing the voltage change on the load to the transmitter 40.

The wireless charging system according to the present invention overcomes the problem that the output voltage of the transmitter circuit of the conventional wireless charging system cannot realize self-adaptive adjustment based on the change of the load, and reduces the power consumption of the wireless charging system.

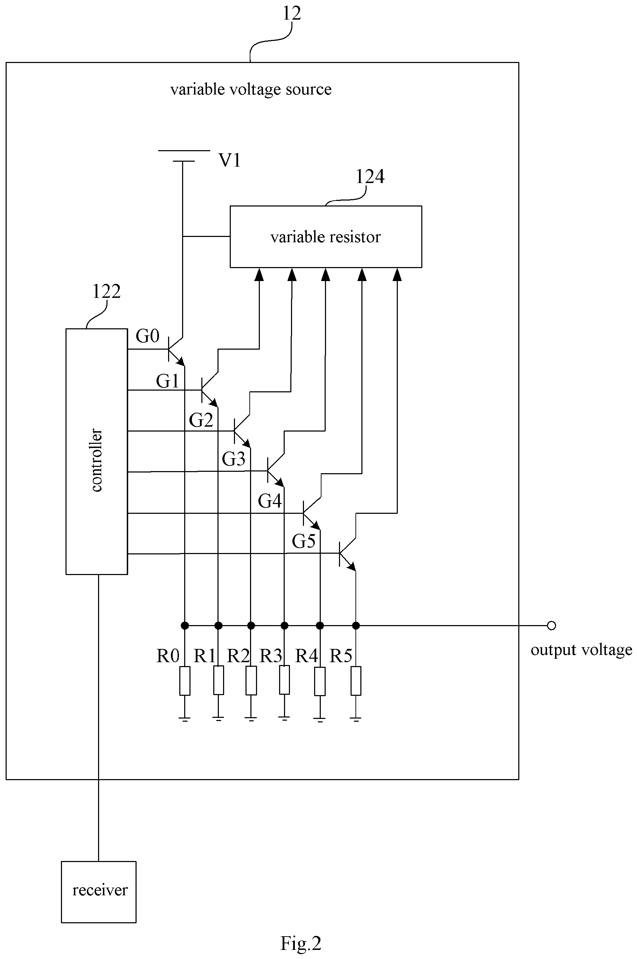

Fig. 2 schematically shows a variable voltage source according to an embodiment of the present invention. The variable voltage source 12 can comprise a controller 122 and a variable resistor 124. The controller 122 can control a resistance value of the variable resistor 124 based on the signal received from the receiver 50.

As shown in Fig. 2, within the controller, different voltage change amounts can correspond to different codes respectively, and thus a corresponding output interface is selected. For example, when no voltage change occurs, the corresponding code enables the controller to select G0 output interface, i.e., the G0 output interface outputs a binary "1", and enables a corresponding triode to turn on. In such a case the output voltage is maintained as V1 (i.e., a voltage at the R0). When a first voltage change amount occurs, and corresponds to a first magnitude in the controller, the magnitude can indicate the selection of G1 output interface, i.e., the G1 output interface outputs a binary "1", and enable a corresponding triode to turn on. In such a case, the voltage value V1*R1/(R1+ΔR) at R1 is namely the actual output voltage value, that is, the voltage of the variable voltage source changes from V1 to a voltage at R1. By analogy, various output voltages can be generated. In this way, the output voltage of the transmitter circuit will be changed with the change of the load, thereby achieving the effect of voltage feedback.

Because the output voltage of the transmitter circuit can realize self-adaptive adjustment based on the change of the load, the power consumption of the wireless charging system is reduced.

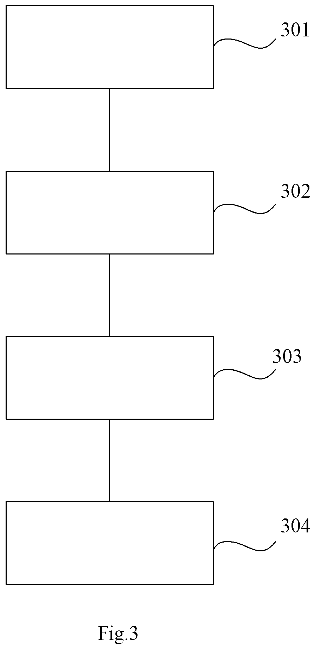

Fig. 3 schematically shows a flow chart of a method for use in a wireless charging system according to an embodiment of the present invention.

At step 301, a voltage detector located at a side of the receiver circuit detects a voltage change on the load, and provides a signal representing the voltage change on the load to a transmitter. At step 302, the transmitter is used to transmit the signal representing the voltage change on the load. At step 303, a receiver is used to receive the signal from the transmitter and provide the signal to the transmitter circuit. At step 304, a variable voltage source in the transmitter circuit is used to provide different output voltages to the receiver circuit based on the signal received from the receiver.

The method for use in a wireless charging system according to the present invention overcomes the problem that the output voltage of the transmitter circuit of the conventional wireless charging system cannot realize self-adaptive adjustment based on the change of the load, and reduces the power consumption of the wireless charging system.

Although respective exemplary embodiments have been shown and illustrated, the ordinary skilled person in the art should understand that various modifications can be made to these exemplary embodiments in terms of forms and details without deviating from the spirit and the scope of the concept of the present invention defined by the attached claims.

## Claims

1. A wireless charging system, comprising a receiver circuit and a transmitter circuit, wherein the wireless charging system further comprises:
a voltage detector, connected to a load located at a side of the receiver circuit, for detecting a voltage change on the load;
a transmitter, connected to the voltage detector, for receiving a signal representing the voltage change on the load from the voltage detector and transmitting the signal;
a receiver for receiving the signal from the transmitter and providing the signal to the transmitter circuit;
wherein the transmitter circuit comprises a variable voltage source for providing different output voltages to the receiver circuit based on the signal received from the receiver.

2. The wireless charging system according to claim 1, wherein the variable voltage source comprises a controller and a variable resistor, the controller controls a resistance value of the variable resistor based on the signal received from the receiver.

3. The wireless charging system according to claim 2, wherein the variable resistor is a slide resistor.

4. The wireless charging system according to claim 1, wherein the transmitter circuit further comprises: a driver for converting a voltage from the variable voltage source into a power signal for wireless transmission.

5. The wireless charging system according to claim 1, wherein the receiver circuit comprises:
a rectifier for converting the wirelessly received power signal into a voltage signal; and
a voltage regulator for regulating the voltage signal and providing the voltage signal to the load.

6. The wireless charging system according to claim 1, wherein the transmitter transmits the signal representing the voltage change on the load to the receiver by wireless communication.

7. The wireless charging system according to claim 1, wherein the transmitter performs binary coding on the voltage change on the load, and the receiver decodes the binary coded voltage change on the load.

8. The wireless charging system according to claim 1, wherein the voltage detector integrates the signal representing the voltage change on the load before providing the signal to the transmitter.

9. A device, comprising:
a voltage detector for detecting a voltage change on a load located in the device; and
a transmitter, connected to the voltage detector, for receiving a signal representing the voltage change on the load from the voltage detector and transmitting the signal wirelessly.

10. The device according to claim 9, further comprising:
a receiving coil for receiving a power signal wirelessly;
a rectifier for converting the wirelessly received power signal into a voltage signal; and
a voltage regulator for regulating the voltage signal and providing the voltage signal to the load.

11. A power supply device, comprising:
a receiver for receiving signals wirelessly; and
a variable voltage source for outputting different output voltages based on the signals received from the receiver.

12. The power supply device according to claim 11, wherein the variable voltage source comprises a controller and a variable resistor, the controller controls a resistance value of the variable resistor based on the signals received from the receiver.

13. The power supply device according to claim 11, further comprising:
a driver for converting a voltage from the variable voltage source into a power signal for wireless transmission; and
a transmitting coil for transmitting the power signal wirelessly.

14. A method for use in a wireless charging system, comprising:
detecting a voltage change on a load by a voltage detector located at a side of a receiver circuit, and providing a signal representing the voltage change on the load to a transmitter;
transmitting the signal representing the voltage change on the load by the transmitter;
receiving the signal from the transmitter by a receiver, and providing the signal to a transmitter circuit; and
providing different output voltages to the receiver circuit based on the signal received from the receiver by a variable voltage source in the transmitter circuit.
